**Europäisches Patentamt**

**European Patent Office**

**Office européen des brevets**

(19)

(11) **EP 1 584 381 A1**

(12) **DEMANDE DE BREVET EUROPEEN**

(43) Date de publication:
**12.10.2005 Bulletin 2005/41**

(51) Int Cl.⁷: **B09C 1/08**, B09C 101/00

(21) Numéro de dépôt: **05290568.4**

(22) Date de dépôt: **15.03.2005**

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR LV MK YU**

(30) Priorité: **09.04.2004 FR 0403794**

(71) Demandeur: **Electricité de France**
**75008 Paris (FR)**

(72) Inventeur: **Baticle, Pascal**
**77140 Nonville (FR)**

(74) Mandataire: **Doressamy, Clarisse**
**Cabinet Plasseraud**
**65/67 rue de la Victoire**
**75440 Paris Cedex 09 (FR)**

(54) **Procédé de traitement de sol avec utilisation d'électrodes bipolaires et dispositif de mise en oeuvre**

(57) L'invention concerne un procédé de traitement de sol comprenant :

a) Au moins un enfoncement vertical dans le sol (10) d'au moins un système (9) d'électrodes rectiligne, ledit système (9) d'électrodes comprenant au moins une tige (2,3,5,50,51) comportant une zone de première polarité (5), au moins une zone bipolaire (3a,3b,3c) et au moins une zone isolante (2a, 2b,2c,2d), et au moins un tube creux (1) coaxial à ladite tige (2,3,5,50,51), entourant ladite tige (2,3,5,50,51) et constituant une zone de seconde polarité (1) apte à coulisser autour de ladite tige (2,3,5,50,51), ladite zone de seconde polarité (1) étant placée de façon à découvrir au moins la zone de première polarité (5) dudit système (9) d'électrodes,
b) Une mise sous champ électrique du système (9) d'électrodes.

L'invention concerne aussi un dispositif de traitement de sol (10) particulièrement adapté au procédé selon l'invention. Application particulière à la dépollution de sol.

FIG. 8

EP 1 584 381 A1

**Description**

L'invention concerne un procédé de traitement de sol comprenant l'utilisation d'au moins un système d'électrodes enfoncé au moins en partie dans le sol. L'invention concerne aussi un dispositif destiné plus particulièrement à la mise en oeuvre d'un tel procédé. L'invention concerne enfin l'utilisation d'un tel procédé ou d'un tel dispositif pour la dépollution de sol.

Le principe de la déshydratation de lagunes de carrières par électro-osmose est connu. Ainsi, dans la publication « *Stabilization Consolidation Treatments for Soft Clayey soil*», *Fernando Veniale, Bul. Stiint. al Institutelui de Constructii Bucurestii, T.30, Nr.1, 1984, p. 59-67*, il est décrit l'application de l'électro-osmose au traitement de consolidation d'argile de carrières à l'aide d'électrodes à base d'aluminium. Des électrodes monopolaires sont ainsi alternées et enfoncées régulièrement dans le terrain traité de façon à déshydrater la carrière. Chaque électrode est d'une seule polarité. Les deux polarités sont représentées et alternées au sein du système ainsi constitué.

Un tel procédé de l'art antérieur a aussi été essayé pour des dépollutions de sol, en particulier pour les situations dans lesquels le sol est pollué principalement par une pollution de type organique. Un tel cas de pollution est en général un cas tel que les couches supérieures du sol sont les plus polluées, tel dans la situation due à un déversement accidentel d'un produit pétrolier dans et sur le sol. Le mécanisme chimique utilisé est celui de la réaction de Fenton, qui est favorisée par un champ électrique (électro-Fenton). Une telle réaction s'effectue généralement en présence d'eau (généralement présente dans la nappe à dépolluer ou dans le sol), et d'ions ferreux/ ferriques qui agissent comme catalyseurs (généralement présents dans le sol). L'argile (généralement présente dans le sol) favorise les réactions d'oxydation des polluants organiques en adsorbant et en orientant chimiquement lesdits polluants. Des radicaux hydroxyles se forment dans le sol par une combinaison de réactions chimiques et électrochimiques, décomposant sur place les produits organiques polluants. Des réactions d'électro-Fenton sont décrites dans la littérature, dans des domaines plus généraux que le domaine particulier des sols. Ainsi existent deux communications établies lors du congrès SFC Environnement 2002 des 14 et 15 Novembre 2002 qui sont : "Application du procédé électro-Fenton à l'élimination de pesticides aromatiques en milieu aqueux" de Nihal Oturan, Jean-Jacques Aaron et Mehmet A. Oturan et "Procédé électro-Fenton, étude de l'influence des paramètres expérimentaux" de Elodie Guivarch et Mehmet Oturan Cette réaction marche bien tant que le sol est homogène et que la pollution du sol est homogène. Mais dès que le sol et/ou la pollution du sol est un peu hétérogène, i. e. comprend au moins une hétérogénéité source de différence dans le comportement électrique, le système est tel que le courant entre deux électrodes de polarité contraire plantées l'une à côté de l'autre (à une distance généralement de l'ordre du mètre) va passer préférentiellement dans la strate du sol correspondant à une résistance électrique plus faible, dépolluant de préférence et pratiquement uniquement cette strate. La (ou les) autre(s) strate(s) ne sera (seront) pratiquement pas dépolluée(s). C'est ce qui est montré dans la publication suivante qui porte sur les effets d'hétérogénéités sur la répartition d'un champ électrique : "Electrokinetic treatment of cadmium spiked clays. Influence of the heterogeneities." de Pascal Marceau, Paul Broquet, et Pascal Baticle, présentée lors du congrès "5th meeting of the Environmental and engineering Geophysical Society European Section" September 6-9, 1999, Budapest ; ainsi que dans la thèse "Les techniques électrocinétiques appliquées à la dépollution des métaux lourds dans les sols. Application au cadmium." de Pascal Marceau, soutenue le 15/12/1999 à Besançon, Université de Franche-Comté.

Le procédé et le dispositif selon l'invention permettent de résoudre les problèmes de l'art antérieur, en ce qu'ils permettent, par l'utilisation d'au moins un système d'électrodes, de préférence d'une pluralité de systèmes d'électrodes, de dépolluer (l'intérieur d') un sol par l'utilisation dudit ou desdits systèmes d'électrodes plantés verticalement dans ledit sol, généralement à partir de la surface. La dépollution selon l'invention comprend le traitement éventuel de polluants, principalement organiques.

Ainsi, le procédé selon l'invention est un procédé de traitement de sol comprenant les étapes successives suivantes:

a) Au moins un enfoncement sensiblement vertical au moins partiel dans le sol d'au moins un système d'électrodes sensiblement rectiligne, ledit système d'électrodes comprenant au moins une tige comportant une zone de première polarité, au moins une zone bipolaire et au moins une zone isolante, et au moins un tube creux coaxial à ladite tige, entourant au moins partiellement ladite tige et constituant au moins partiellement une zone de seconde polarité apte à coulisser au moins partiellement autour de ladite tige, ladite zone de seconde polarité étant placée de façon à découvrir au moins la zone de première polarité dudit système d'électrodes,

b) Une mise sous champ électrique du système d'électrodes.

Pour le fonctionnement du procédé de l'invention, le sol comprend généralement de l'eau, du fer et de l'argile. Dans le cas d'un sol ne comprenant pas suffisamment l'un au moins de ces éléments, il est possible selon le procédé de l'invention que l'on puisse ajouter ledit élément.

Dans le cas général, le procédé s'appuie normalement sur l'eau contenue naturellement dans le sol (la nappe phréatique, la pluie, avec éventuellement un arrosage d'appoint quand la période est trop sèche). Mais l'on peut aussi ajouter de l'eau dans le cas où le sol à traiter ne comporte pas assez d'eau, ce qui est particulièrement facile si la zone de deuxième polarité est anodique. A cet égard, la stabilité du courant injecté est un très bon « mode » de suivi de l'humidité du sol. S'il n'y a pas assez d'eau l'intensité chute pour une même tension. En arrosant le sol, on récupère généralement l'intensité d'origine. Dans le cas contraire où la zone de première polarité est anodique, il est encore possible d'injecter de l'eau, par exemple dans un drain vertical qui permet d'injecter de l'eau à faible distance du système d'électrodes.

Dans le cas où le sol à traiter ne comporte pas assez d'argile, l'argile à introduire peut l'être sous forme de barbotine (qui est généralement une suspension très diluée d'argile), par exemple l'argile peut être de la bentonite, qui est utilisée par ailleurs lors de forage comme lubrifiant des outils de coupe et comme vecteur d'évacuation des débris. Pour évaluer le manque d'argile, on peut utiliser un test qui permet de définir la surface active des argiles, tel qu'un essai au bleu de méthylène.

On peut doser le fer dans un sol après minéralisation de celui-ci ou simple lixiviation avec un acide. Un sol très clair contient généralement peu de fer. Dans le cas où le sol à traiter ne comporte pas assez de fer, il est possible d'introduire du fer dans le sol, ce qui ne présente généralement pas de problème étant donnée la faible quantité nécessaire pour catalyser la réaction d'electro-Fenton. Les systèmes d'électrodes bipolaires peuvent être entièrement ou partiellement en acier non inoxydable (ou acier noir) pour ne pas introduire de polluants métalliques dans le sol L'acier dit noir contient généralement une très forte teneur en fer et ne contient pas de métaux tels que le nickel ou le chrome qui sont des polluants, par contre il rouille facilement. La moindre dissolution chimique ou électrochimique de l'acier dans un sol va fatalement y introduire du fer, ce qui est recherché dans le cadre de la présente invention.

Typiquement, l'étape a) est généralement telle que le placement de ladite zone de seconde polarité est tel que ladite zone de seconde polarité découvre la zone de première polarité et aussi partiellement une zone isolante, située généralement au moins en partie entre ladite zone de première polarité et ladite zone de seconde polarité. Mais il se peut aussi dans le cadre de la présente invention que l'étape a) soit généralement telle que le placement de ladite zone de seconde polarité est tel que ladite zone de seconde polarité découvre la zone de première polarité, totalement une première zone isolante, une zone bipolaire et aussi partiellement une seconde zone isolante, située généralement au moins en partie entre ladite zone de première polarité et ladite zone de seconde polarité, la première zone isolante étant située entre la zone de première polarité et la zone bipolaire. Cela sera explicité par la suite. Pour généraliser et couvrir ces deux cas, on dit ici que la zone de seconde polarité est placée de façon à découvrir au moins la zone de première polarité et au moins en partie une zone isolante située le plus près de ladite zone de première polarité.

De manière préférée, l'étape a) réalise l'enfoncement de l'extrémité de la tige dans l'eau d'une nappe phréatique, que l'on cherche à protéger de la pollution organique par exemple accidentelle.

Sans vouloir être liée par une quelconque théorie et sous réserve d'une meilleure compréhension ultérieure des phénomènes en jeu, la demanderesse postule que le système d'électrodes, par électro-osmose de l'eau de la nappe qui remonte le long du système d'électrodes, est approvisionné en eau pour réaliser la réaction de Fenton et ainsi dégrader des polluants organiques que l'on cherche à éliminer. Par électro-osmose, on entend selon l'invention la mise en mouvement des molécules d'eau par l'action d'un champ électrique continu. Généralement, les molécules d'eau sont attirées vers la zone de polarité qui constitue la cathode. Il peut exister aussi un phénomène d'électro-migration, c'est-à-dire de mise en mouvement d'espèces ioniques par un champ électrique continu. Par espèces ioniques, on entend des espèces ionisées ou ionisables. Il peut se produire aussi d'autre(s) phénomène(s).

En effet, la réaction de Fenton est une réaction du type :

$$Fe^{2+} + H_2O_2 + H^+ \rightarrow Fe^{3+} + H_2O + \cdot OH.$$

Sous champ électrique et dans un milieu comme un sol, les microparticules métalliques souvent ferreuses se comportent a priori comme des électrodes. Localement, les conditions d'obtention des réactifs de base se retrouvent donc : fer (II), protons et oxygène (qui en milieu localement acide devient de l'eau oxygénée ce qui va ensuite produire les radicaux hydroxyles). Par couplage aux mouvements d'ions et d'eau dans le sol engendrés par le champ électrique, on obtient finalement les conditions oxydantes nécessaires pour dégrader les polluants organiques. En effet, les radicaux hydroxyles ainsi formés réagissent sur les composés organiques présents dans le milieu par des réactions généralement d'addition électrophile sur les parties aromatiques ou par abstraction d'atome d'hydrogène sur les chaînes latérales. Les produits finaux, lorsque la molécule initiale contient des hétéroatomes, sont généralement $CO_2$, $H_2O$ et des ions inorganiques. De préférence, la tige du procédé selon l'invention comprend une alternance de zones bipolaires et de zones isolantes. Selon l'invention, « une alternance de zones bipolaires et de zones isolantes » signifie au moins deux successions d'une zone bipolaire et d'une zone isolante, une succession étant constituée d'une zone bipolaire suivie d'une zone isolante, les zones bipolaires jouxtant généralement chacune deux zones isolantes, les zones isolantes jouxtant généralement chacune une ou deux zones bipolaires.

Dans l'étape a), ledit système d'électrodes une fois enfoncé dans le sol présente de préférence une extrémité supérieure hors du sol, c'est-à-dire au-dessus de la surface du sol ainsi qu'il sera explicité par la suite, au moins une zone bipolaire dans le sol, et une extrémité inférieure comportant la zone de première polarité dans le sol. Ainsi, dans l'étape b), le courant circule et il existe une différence de potentiel entre la zone de première polarité découverte par la zone de seconde polarité et ladite zone de seconde polarité, généralement séparée de la zone de seconde polarité au moins partiellement par au moins une zone isolante. Il se peut aussi, si une zone bipolaire est aussi découverte par la zone de seconde polarité, qu'il existe aussi et en plus une différence de potentiel entre la zone de première polarité et une partie de ladite zone bipolaire se transformant en zone de seconde polarité sous l'influence du champ électrique, et une différence de potentiel entre la zone de seconde polarité et une autre partie de ladite zone bipolaire se transformant en zone de première polarité sous l'influence du champ électrique. En général et de préférence, les parties de polarité contraire entre lesquelles il existe une différence de potentiel et le courant circule sont séparées entre elles au moins partiellement par au moins une partie de zone isolante.

Par « sol », on entend selon l'invention toute surface sur laquelle on pourrait marcher, comprenant essentiellement un matériau plus ou moins hydraté dont les constituants sont essentiellement d'origine géologique et/ou pédologique, qu'ils soient en place naturellement et/ou à la suite d'au moins une intervention humaine. Les boues essentiellement d'origine minérale, dont les boues sédimentaires extraites par curage des canaux ou des barrages, sont comprises dans cette définition, même si on ne peut y marcher sans danger (sol plus ou moins mouvant).

Par « boue », on entend selon l'invention un mélange solide-liquide, avec généralement plus de liquide que de solide. Typiquement, dans le cas de boues sédimentaires extraites par succion, le liquide est de l'eau et le solide est une matière minérale plus ou moins argileuse ou tout autre matériau finement divisé. Une argile est soit un minéral argileux, soit une roche composée pour l'essentiel de ces minéraux. En ordre de grandeur, on peut indiquer qu'une boue contient une quantité de solide d'au moins 50 g/l dans le liquide. A titre d'exemple, une boue de curage de canal peut comprendre environ 150 à 350g/l de matière sèche dans de l'eau, soit de 12.5 à 30% en poids de matière sèche, pour une densité d'environ 1,2.

Par « système d'électrodes», on entend selon l'invention un système d'électrodes, comprenant au moins une zone de première polarité, par exemple anodique, et au moins une zone de seconde polarité, contraire, par exemple cathodique, c'est-à-dire comprenant généralement au moins une anode et au moins une cathode. A la différence de l'art antérieur, ce système comprend en son sein les deux polarités, et non pas une seule polarité. Ce système d'électrodes est polarisé sous l'action d'un champ électrique, par exemple par la fermeture d'un circuit comprenant au moins un générateur aux bornes de zones de polarité contraire. Il fonctionne donc le plus souvent à tension constante bien qu'il puisse fonctionner à courant constant. Par « électrode » on entend selon l'invention cathode ou anode. Selon l'invention, une zone de première polarité est généralement soit cathodique, soit anodique, et une zone de deuxième polarité, de polarité contraire à celle de la zone de première polarité, est soit anodique, soit cathodique. Une zone bipolaire, sous l'influence du champ électrique, va être telle qu'une partie de ladite zone bipolaire est polarisée en zone de première polarité, en face de la zone de seconde polarité ou d'une partie de zone bipolaire qui est transformée sous l'effet du champ électrique en zone de seconde polarité, et une autre partie de ladite zone bipolaire est polarisée en zone de seconde polarité, en face de la zone de première polarité ou d'une partie de zone bipolaire transformée sous l'effet du champ électrique en zone de première polarité.

L'étape b) d'activation permet le traitement, principalement par réaction de Fenton mais aussi par électro-osmose et/ou électromigration, ainsi que l'a montré la tentative d'explication effectuée précédemment par la demanderesse des phénomènes mis en jeu, des espèces le plus souvent organiques présentes dans le sol à proximité dudit système d'électrodes, c'est-à-dire dans une zone d'influence autour du système. Par suite, selon l'invention, grâce au choix judicieux et adapté des zones de polarité contraire, les espèces organiques sont aptes à être transformées en dioxyde de carbone en eau et en sels minéraux pour celles contenant des hétéroatomes (autres que carbone, hydrogène ou oxygène) in situ.

Une telle zone d'influence est forcément limitée en taille, et dépend de nombreux paramètres tels que la nature du sol, sa teneur en eau et/ou sa pollution, la géométrie, la nature et le nombre de systèmes d'électrodes etc. Une telle zone d'influence est aisément connue de l'homme du métier dans chacun des cas particuliers qu'il aborde, au moins après quelques tests sur le sol subissant le traitement selon l'invention. Il n'est pas possible de la définir précisément à l'avance, même si l'homme du métier pratiquant usuellement un tel traitement peut connaître son ordre de grandeur.

Dans un mode de réalisation préféré, le procédé selon l'invention comprend de plus au moins une succession des étapes successives suivantes :

c) Une désactivation du système d'électrodes par arrêt au moins partiel du champ électrique,
d) Une remontée partielle de la zone de seconde polarité permettant de découvrir au moins une nouvelle zone bipolaire et/ou au moins une zone isolante, et

e) Une remise sous champ électrique du système d'électrodes.

Typiquement, l'étape d) est telle que la remontée partielle de la zone de seconde polarité permet de découvrir au moins partiellement une zone bipolaire et au moins partiellement une nouvelle zone isolante, c'est-à-dire une succession de zone bipolaire et de zone isolante. La nouvelle zone isolante est située généralement au moins en partie entre ladite zone bipolaire et ladite zone de seconde polarité.

A chaque fois, par la succession d'étapes c), d) et e), qu'une nouvelle zone bipolaire et éventuellement et de préférence une nouvelle zone isolante, est découverte par la zone de seconde polarité, il existe aussi et en plus une différence de potentiel entre une partie de ladite zone bipolaire se transformant en zone de seconde polarité sous l'influence du champ électrique et la zone de première polarité qui est généralement une partie d'une autre zone bipolaire s'étant transformée en zone de première polarité. Et il existe aussi en plus une différence de potentiel entre la zone de seconde polarité et une autre partie de ladite zone bipolaire se transformant en zone de première polarité sous l'influence du champ électrique. Ainsi, à chaque nouvelle succession d'étapes, on doit augmenter la tension entre les électrodes monopolaires d'extrémité que sont la zone de première polarité d'extrémité inférieure et la zone de seconde polarité formant tube coulissant.

Dans un mode de réalisation du procédé selon l'invention, ledit procédé comprend le démontage de toute zone de seconde polarité superflue. Par exemple, lors de la réalisation de l'étape d), il est remonté à la surface une zone de seconde polarité qui n'a plus d'utilité, et qui est donc superflue. Il est possible de prévoir que cette zone de seconde polarité est démontable entièrement ou en partie. Ainsi le procédé selon invention peut comprendre le démontage de ladite zone de seconde polarité superflue.

Le tube creux constituant au moins partiellement la zone de seconde polarité comprend généralement au moins une zone isolante intérieure, généralement sur pratiquement toute sa longueur.

Ainsi, par un procédé mettant en oeuvre l'utilisation de système(s) d'électrodes coaxiales et des phénomènes électrochimiques de type réaction de Fenton, la dépollution s'effectue avantageusement. Ainsi qu'il sera explicité ci-après, la dépollution des sols se fait avantageusement depuis le fond du sol vers la surface.

« Hors du sol » signifie donc selon l'invention généralement dans l'air atmosphérique et/ou dans l'eau de surface.

L'invention permet donc avantageusement par rapport à l'état de la technique, grâce à l'utilisation astucieuse et combinée d'au moins un système d'électrodes à géométrie particulière et d'une mise en oeuvre d'un mouvement de zone de seconde polarité vers la surface, découvrant au moins une zone bipolaire et une zone de première polarité, une dépollution progressive à partir du fond du sol.

Un autre avantage du procédé selon l'invention est une consommation énergétique faible, parce que l'espace entre une zone de première polarité et la zone de seconde polarité est généralement minimum, i.e. relativement faible. Un tel espace est généralement dimensionné en fonction de divers paramètres tels que par exemple le nombre de systèmes d'électrodes ; la géométrie de chaque système d'électrodes ; la pollution en espèces organiques susceptibles d'être traitées selon le procédé de l'invention ; la présence d'espèces organiques naturelles dans le sol, elles aussi susceptibles d'être dégradées selon le procédé de l'invention.

Un autre avantage du procédé selon l'invention est la relative facilité d'implantation du ou des systèmes d'électrodes.

Dans un mode particulier de réalisation selon l'invention, le système d'électrodes étant principalement constitué de parties assemblables appelées tronçons, l'enfoncement du système d'électrodes dans le sol s'effectue par un processus progressif d'enfoncement et d'assemblage successifs des tronçons les uns aux autres, ledit processus comprenant au moins une étape d'enfoncement au moins partiel d'au moins un tronçon, créant un ensemble de tronçons au moins en partie enfoncé, suivie d'au moins une étape d'assemblage au moins partiel d'au moins un autre tronçon à l'ensemble de tronçon(s) au moins en partie enfoncé déjà constitué. Un tel mode de réalisation permet avantageusement de faciliter l'enfoncement du système d'électrodes dans le sol. De préférence, un tel assemblage comprend au moins un vissage. Dans certains cas l'enfoncement sera facilité par un forage préalable d'un diamètre équivalent à celui de l'électrode de première polarité, voire de celui de l'électrode de seconde polarité si le sol est très résistant mécaniquement. Dans ce dernier cas le contact entre les électrodes et le sol sera favorisé par l'injection d'une barbotine d'argile.

Avantageusement, un tel mode particulier de réalisation permet la mise en oeuvre relativement simple du procédé selon l'invention, puisqu'il s'agit d'enfoncer verticalement des tronçons courts de système d'électrodes, de visser un ou plusieurs nouveaux tronçons courts sur ceux-ci, d'enfoncer à nouveau et de recommencer jusqu'à atteindre le fond du sol (espace le plus bas où se ressent la pollution, par estimation ou mesure).

Les systèmes d'électrodes utilisés sont ou non deux à deux semblables, tant en dimensions qu'en géométrie et/ou en polarité.

Dans un mode avantageux de réalisation de l'invention, le procédé selon l'invention est tel que l'on utilise une pluralité de systèmes d'électrodes, lesdits systèmes d'électrodes étant de préférence pratiquement tous, de préférence tous, de polarités identiques (c'est-à-dire que les zones de même polarité ont le même signe), et on procède aux différentes étapes, de préférence de façon pratiquement simultanée, pour chacun desdits systèmes d'électrodes. Ainsi le traitement d'un sol, par exemple de plusieurs hectares se fait simplement en implantant autant de systèmes d'électrodes que nécessaire. Le nombre des systèmes d'électrodes varie suivant différents paramètres tel que la surface du sol à traiter. Comme expliqué précédemment, la géométrie des systèmes d'électrodes détermine au moins en partie la zone d'influence desdits systèmes d'électrodes. De préférence tous les systèmes d'électrodes sont de géométrie pratiquement identique mais il est aussi possible selon l'invention qu'ils soient au moins partiellement de géométrie sensiblement différente, c'est-à-dire qu'au moins deux, ou bien plus de deux, d'entre elles soient de géométrie sensiblement différente.

Dans le cas de l'utilisation pour la dégradation d'espèces organiques, on obtient des sols dépollués grâce au procédé d'utilisation de systèmes d'électrodes selon l'invention utilisé pendant une durée raisonnable, pour un sol hétérogène. Ainsi, le traitement selon l'invention peut avantageusement être ciblé malgré la présence d'hétérogénéités dans le sol.

Par « activation » du système d'électrodes selon l'invention, on entend une mise sous champ électrique. Une telle mise sous champ électrique permet la mise en mouvement de l'eau voire des espèces ioniques et ionisables dans le sol, ainsi qu'il a été explicité précédemment. La tension imposée est généralement sensiblement constante, et l'intensité varie selon les paramètres tels que la nature du sol, sa teneur en eau, sa teneur en espèces ioniques mobiles...

L'invention concerne aussi un procédé de dépollution de sol comprenant au moins un procédé de traitement de sol selon l'invention. De préférence un tel procédé est un procédé de dégradation de polluants organiques. Ces polluants organiques peuvent être variés. Par exemple, ils peuvent être des espèces HAP (Hydrocarbures polyaromatiques) qui, en se décomposant selon la réaction de Fenton, donnent principalement de l'eau, des espèces carbonatées sous forme solide ou gazeuse (gaz carbonique) et des sels minéraux quand les molécules polluantes comprennent des éléments autres que l'hydrogène, l'oxygène ou le carbone. Mais ils peuvent être aussi des pesticides, des PCB (Polychlorobiphényles), ainsi que des carburants automobiles, du fioul lourd, du kérosène ou tout autre hydrocarbure ou mélange d'hydrocarbures.

En particulier les sols traités par le procédé selon l'invention peuvent être des sols industriels, des boues, des sédiments, aussi bien que des sols hétérogènes ou des sols de milieu industriel complexe.

L'invention concerne aussi un dispositif de traitement de sol comprenant au moins un système d'électrodes sensiblement rectiligne, ledit système d'électrodes comprenant au moins une tige comprenant une zone de première polarité, au moins une zone bipolaire et au moins une zone isolante, et au moins un tube creux coaxial à ladite tige, entourant au moins partiellement ladite tige et constituant au moins partiellement une zone de seconde polarité apte à coulisser au moins partiellement autour de ladite tige, ledit système d'électrodes étant de plus apte à être activé.

Le système d'électrodes est généralement et de préférence apte à être enfoncé au moins partiellement dans le sol, le plus souvent de façon, une fois enfoncé dans le sol, à présenter une extrémité supérieure hors du sol et une extrémité inférieure comportant une zone de première polarité dans le sol. Un moyen d'enfoncement dans le sol est par exemple un martelage de la pièce de frappe située à l'extrémité supérieure du système devant être enfoncée dans le sol. Une forme généralement aiguisée et biseautée de l'extrémité inférieure du système facilitera la pénétration dudit système dans le sol.

Ladite tige comprend de préférence une alternance de zones bipolaires et de zones isolantes.

Dans un mode de réalisation préféré du dispositif selon l'invention, ladite zone de seconde polarité est en outre apte à être remontée au moins partiellement vers le haut de façon à pouvoir découvrir au moins une zone bipolaire, de préférence une nouvelle alternance de zone bipolaire et de zone isolante, et ce si possible aussi souvent que nécessaire.

De préférence, la zone de seconde polarité est apte à être démontée au moins partiellement, de préférence pratiquement totalement.

Selon l'invention, le dispositif comprend au moins un moyen d'activation du système d'électrodes, c'est-à-dire au moins un moyen de mise sous champ électrique du système d'électrodes.

De façon préférée, le système d'électrodes est principalement constitué de parties assemblables appelées tronçons, et de façon encore plus préférée un tel assemblage comprend au moins un vissage.

La zone de première polarité ou de seconde polarité, lorsqu'elle est cathodique, comprend généralement, de préférence est constituée principalement, d(e l)'acie inoxydable (ou inox) ou d(e l) ' acier non inoxydable, de préférence d(e l)'acier inoxydable. Dans le cas où elle est constituée principalement d'acier non inoxydable, c'est une électrode consommable.

La zone bipolaire comprend généralement de l'acier inoxydable ou de l'acier non inoxydable ou du titane, au moins partiellement recouvert d'au moins un matériau favorisant la réaction de Fenton, de préférence de $SnO_2$ dopé par Sb. Deux techniques de dépôt dudit matériau ont en particulier été testées : le spray-pyrolyse (pulvérisation d'une solution contenant le précurseur ou le mélange de précurseur sur une surface chaude) et le dépôt par CVD (acronyme de "Chemical Vapour Deposition" pour "dépôt chimique en phase vapeur"). Le dépôt fait tout au plus quelques microns d'épaisseur et la teneur en oxyde d'antimoine dans l'oxyde d'étain est de l'ordre de quelques %. En effet, sans antimoine, l'oxyde d'étain n'est pas suffisamment conducteur pour être utilisé comme électrode. Mais s'il contient trop d'antimoine, il perd ses propriétés de « générateur » de radicaux hydroxyles.

La zone de seconde polarité ou de première polarité, lorsqu'elle est anodique, comprend généralement, de préférence est constituée principalement, du (de) titane, de préférence entièrement du (de) titane, recouvert d'au moins un composé de métal, précieux ou non, ledit composé de métal, précieux ou non, étant choisi de préférence dans le groupe formé par le ruthénium, l'iridium, le tantale, l'étain, et l'antimoine, sous des formes au moins partiellement oxydées ou non, et leurs mélanges et leurs superpositions. Par exemple un léger dépôt d'oxyde d'iridium sur le titane peut généralement rendre le dépôt d'oxyde d'étain dopé par l'antimoine nettement plus résistant à la corrosion électrochimique.

De préférence, la zone isolante de ladite tige comprend principalement du plastique tel que au moins un composé polymérique choisi dans le groupe formé par le polychlorure de vinyle, les polyéthylènes (toutes densités), les polypropylènes (toutes densités), et leurs mélanges.

Dans le cas où la tige comporte des zones bipolaires et des zones isolantes, la tige peut par exemple dans une première version être entièrement un barreau constitué de titane recouvert de SnO$_2$ dopé par Sb, généralement en couche fine, d'une épaisseur de l'ordre de quelques microns, et comportant à intervalles réguliers, pardessus ledit titane, une gaine par exemple thermo rétractable typiquement en PEHD (Poly Ethylène Haute Densité) formant zones isolantes. En général, la zone de première polarité est connectée au générateur de courant continu auquel est relié le système d'électrodes, et il faut donc la présence d'une amenée de courant pour ladite zone de première polarité, qui traverse la totalité de la tige axiale du système d'électrodes. Ladite amenée de courant, généralement de diamètre plus petit que ladite zone de première polarité, est généralement recouverte d'au moins un matériau isolant, généralement suffisant pour éviter tout contact électrique direct entre ladite amenée de courant et la ou les électrodes bipolaires qu'elle traverse. En conséquence, les électrodes bipolaires sont généralement en forme de tubes dont le diamètre extérieur est généralement égal à celui de ladite zone de première polarité.

Les électrodes bipolaires peuvent être totalement ou partiellement recouverte d'un dépôt. Par exemple pour un dépôt de type anodique, on prend un tube de titane qu'on recouvre d'un dépôt d'oxyde d'étain dopé à l'antimoine sur le tiers le plus près de la zone cathodique.

Dans un mode de réalisation préféré du dispositif selon l'invention, le tube creux constituant au moins partiellement la zone de seconde polarité comprend au moins une zone isolante intérieure généralement sur pratiquement toute sa longueur. Dans un tel cas, ladite zone d'isolation interne comprend généralement du plastique tel que au moins un composé polymérique choisi dans le groupe formé par le polychlorure de vinyle, les polyéthylènes (toutes densités), les polypropylènes (toutes densités), et leurs mélanges.

De préférence le dispositif selon l'invention comprend en outre au moins un moyen de placement (c'est-à-dire de mise en place par enfoncement au moins partiel dans le sol), mécanique ou manuel, d'au moins un système d'électrodes. Un tel moyen de placement est généralement manuel pour les faibles épaisseurs et les faibles résistances de sol, par exemple au moins une massette ou un marteau. Sinon, un tel moyen est mécanique ; il comprend par exemple au moins une foreuse.

Les systèmes d'électrodes utilisés sont ou non deux à deux semblables, tant en dimensions qu'en géométrie et/ou en polarité.

Selon un mode de réalisation préférée, le dispositif de l'invention comprend une pluralité de systèmes d'électrodes, lesdits systèmes d'électrodes étant de préférence pratiquement tous, de préférence tous, de polarités identiques, c'est-à-dire que les zones de première polarité sont de même polarité et que les zones de seconde polarité sont de même polarité. Le nombre des systèmes d'électrodes varie suivant différents paramètres tel que la surface du sol à traiter comme explicité précédemment.

Le dispositif selon l'invention est particulièrement adapté pour la mise en oeuvre du procédé selon l'invention tel que décrit précédemment.

De même l'invention concerne l'utilisation d'un dispositif tel que décrit précédemment, pour la dépollution de sol, en particulier comportant une quantité non négligeable de polluants organiques.

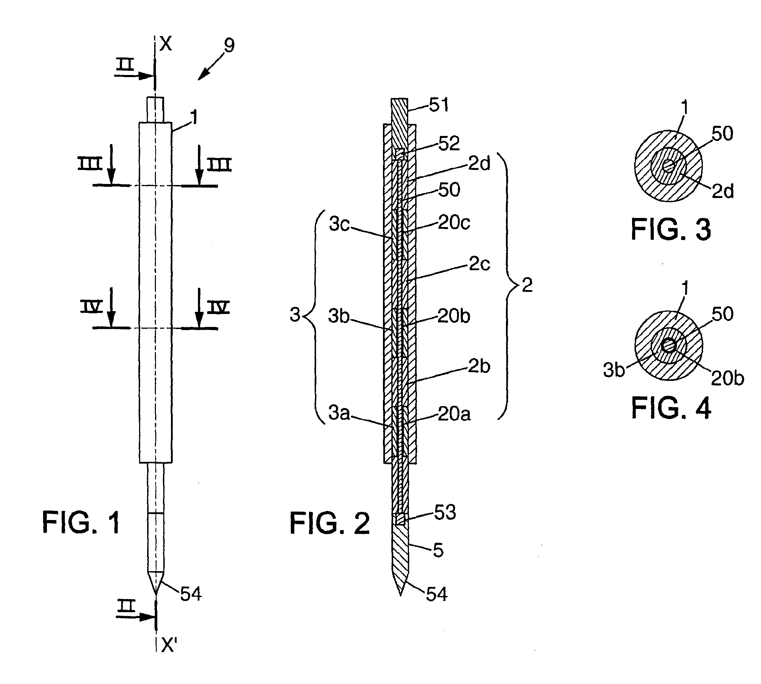

L'invention sera mieux décrite et d'autres caractéristiques et avantages apparaîtront à la lecture de la description qui va suivre, donnée à titre non limitatif, par référence aux figures 1 à 11.

La figure 1 représente, de façon schématique, un système 9 d'électrodes coaxiales avec cathode 1 coulissante mobile selon l'invention. Les figures 2 à 4 représentent respectivement de façon schématique ledit système 9 d'électrodes vu en coupe respectivement longitudinale II - II selon l'axe X'X du système 9 d'électrodes, transversale selon l'axe III - III et transversale selon l'axe IV - IV.

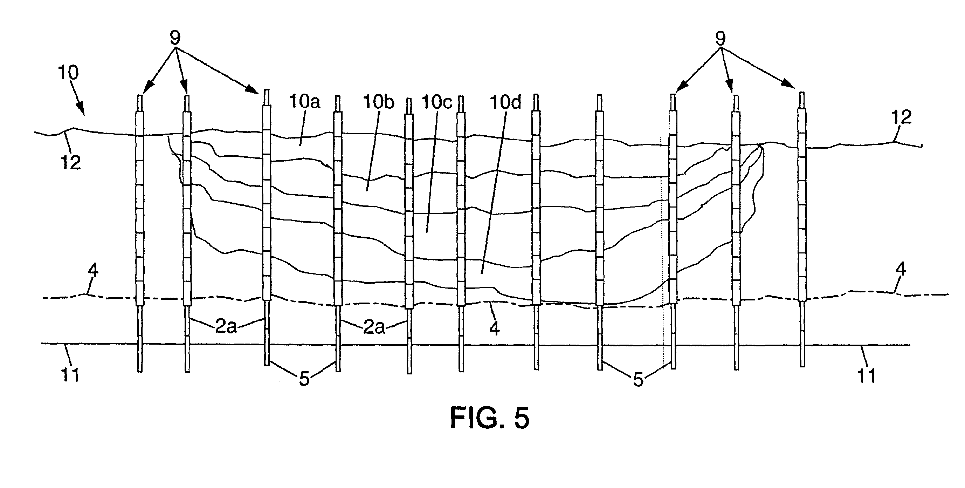

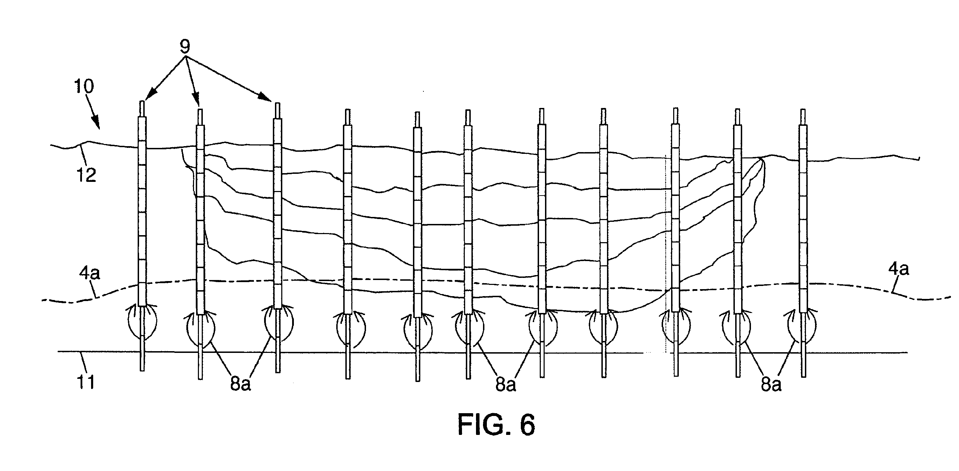

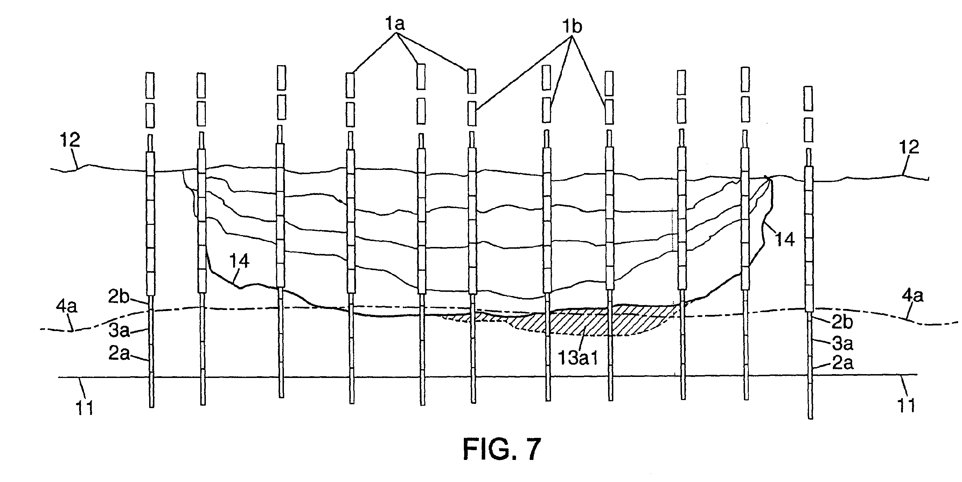

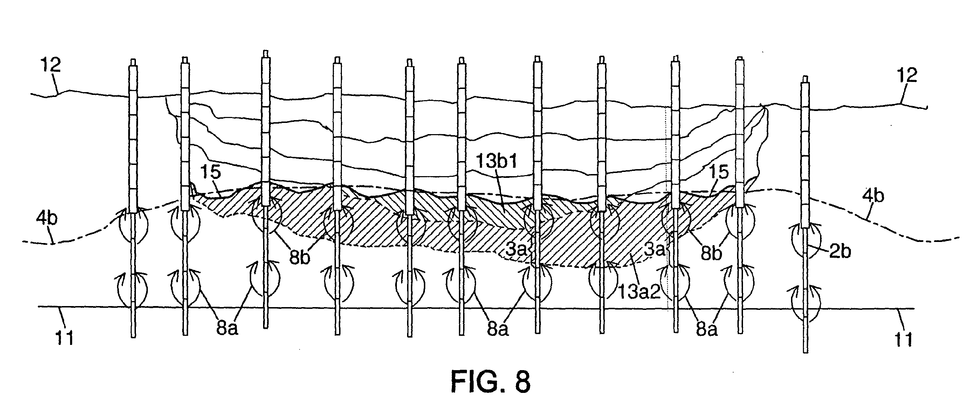

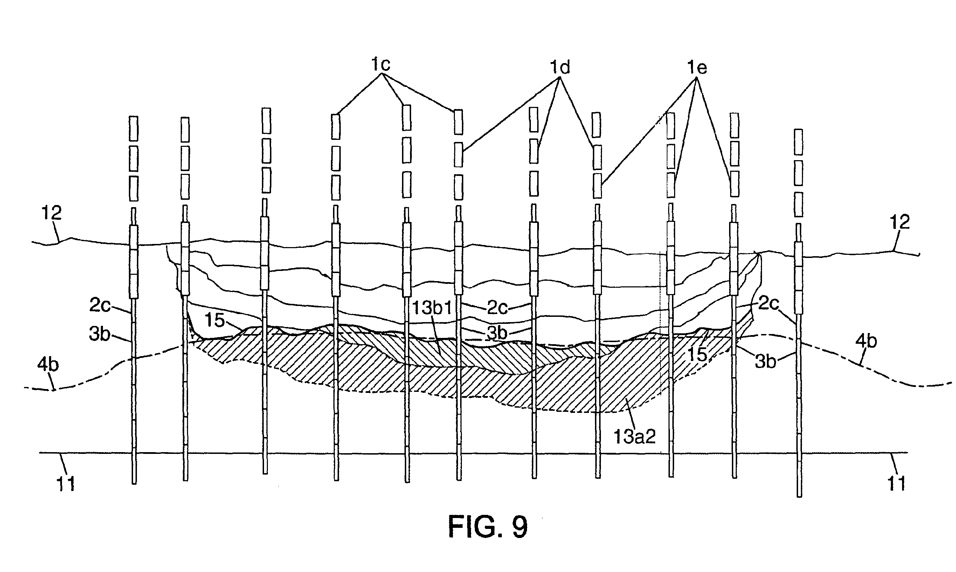

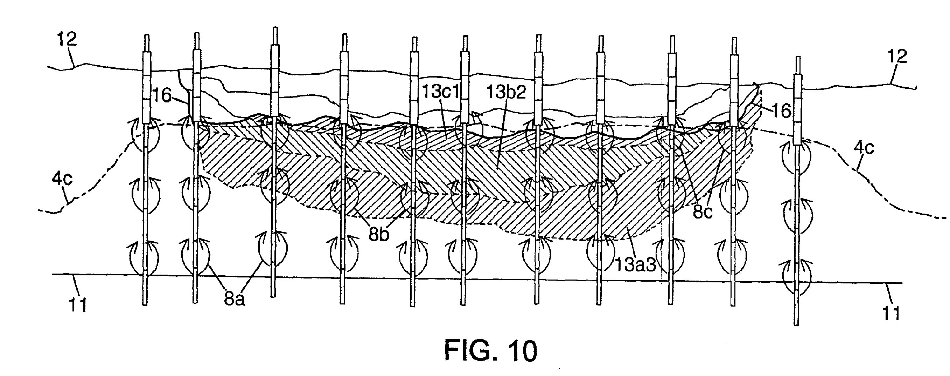

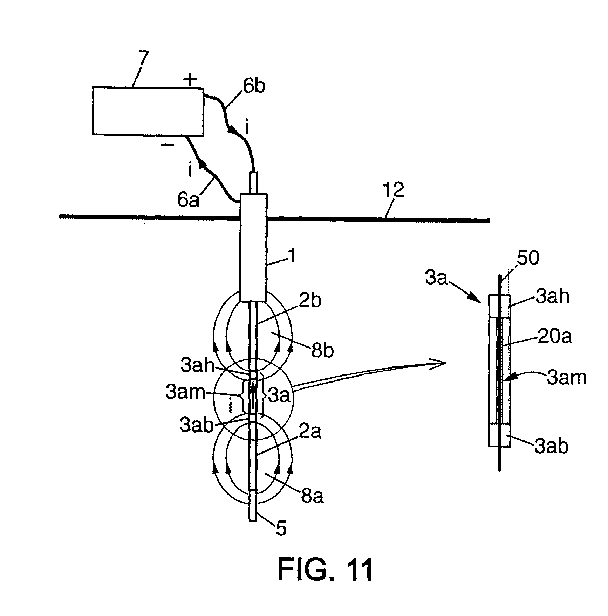

Les figures 5 à 11 représentent, de façon schématique, un traitement pour dépolluer un sol selon l'invention, par un dispositif comprenant le système 9 d'électrodes. Elles correspondent, ainsi qu'il sera explicité ci-après, à un système 9 d'électrodes selon l'invention, tel que représenté par exemple sur les figures 1 à 4. Ce traitement nous servira, après description détaillée des figures 5 à 11, à illustrer les avantages de l'invention. Les figures 5 à 11 représentent, de façon schématique, un traitement selon l'invention pour dépolluer un sol pollué par des polluants organiques. Ainsi la figure 5 représente les systèmes 9 d'électrodes mis en place avant mise sous champ électrique, la figure 6 représente un début de traitement après mise sous champ électrique du sol, la figure 7 représente une remontée partielle des cathodes (une cathode mobile par système d'électrodes) et un démontage de parties cathodiques superflues le champ électrique étant coupé, la figure 8 représente le traitement sur deux niveaux simultanés après remise sous champ électrique du sol, la figure 9 représente une remontée partielle des cathodes et un démontage de parties cathodiques superflues le champ électrique étant coupé, la figure 10 représente le traitement sur trois niveaux simultanés après une remise sous champ électrique du sol, et la figure 11. explicite dans un tel traitement le fonctionnement d'une zone bipolaire 3a du système 9 d'électrodes.

La figure 1 représente, de façon schématique, un système 9 d'électrodes coaxiales avec cathode 1 coulissante mobile selon l'invention. Elle comprend une cathode 1 mobile coulissante comportant une isolation intérieure (non représentée), une zone anodique 5 située à l'extrémité inférieure du système 9 d'électrodes, un ensemble 2 de zones isolantes fixe en alternance avec un ensemble 3 de zones bipolaires fixe. La zone anodique 5 comprend une extrémité 54 aiguisée et biseautée. La figure 2 représente de façon schématique ledit système 9 d'électrodes en coupe longitudinale II - II selon l'axe X'X du système 9 d'électrodes. La cathode 1 peut être constituée de parties 1a, 1b, 1c, 1d, 1e, 1f, 1g et 1h (non représentées sur les figures 1 à 4). On voit que l'ensemble 2 de zones isolantes est constitué des parties 2a, 2b, 2c et 2d, et que l'ensemble 3 de zones bipolaires est constitué des zones anodiques 3a, 3b et 3c, respectivement isolées de l'amenée de courant 50 par les zones isolantes respectives 20a, 20b et 20c. Seule la zone isolante 2a et la zone anodique 5 sont découvertes par la cathode 1. La zone 5 anodique est reliée par une amenée de courant 50, à l'extrémité supérieure 51 dudit système 9 d'électrodes, de façon à être reliée au générateur 4 de courant continu qui alimentera ledit système 9 d'électrodes. L'amenée de courant 50 est fixée en ses deux extrémités par des pièces de fixation 52 et 53, la pièce de fixation 52 servant à relier les pièces 50 et 51, et la pièce de fixation 53 servant à relier les pièces 5 et 50.

La figure 3 représente de façon schématique ledit système 9 d'électrodes en coupe transversale selon l'axe III - III. On y voit la zone isolante 2d, l'amenée de courant 50 et la cathode 1.

La figure 4 représente de façon schématique ledit système 9 d'électrodes en coupe transversale selon l'axe IV - IV. On y voit la zone bipolaire 3b, l'amenée de courant 50, la zone isolante 20b et la cathode 1.

Les figures 5 à 11 représentent, de façon schématique, un traitement pour dépolluer un sol 10 selon l'invention. Elles correspondent, ainsi qu'il sera explicité ci-après, à un système 9 d'électrodes selon l'invention, tel que représenté par exemple sur les figures 1 à 4. Ce traitement nous servira, après description détaillée des figures 5 à 11, à illustrer les avantages de l'invention.

La figure 5 selon l'invention représente les systèmes 9 d'électrodes mis en place avant mise sous champ électrique. Le sol 10 présente en "fond" une nappe phréatique 11 et une surface 12, dans lequel ont été mis en place au moins onze systèmes 9 d'électrodes tels que représentés à la figure 1. On distingue le niveau de la frange capillaire 4, c'est-à-dire le niveau supérieur ou surface de la partie comprenant de l'eau capillaire. Des zones de pollution, de la plus polluée à la moins polluée, sont les zones 10a, 10b, 10c et 10d. Typiquement la zone 10a a été polluée accidentellement et par écoulement ou par diffusion les zones 10b, 10c et 10d ont été touchées par la pollution, la zone 10b étant plus polluée que la zone 10c qui est plus polluée que la zone 10d. Il peut donc y avoir une hétérogénéité de la pollution en plus de l'hétérogénéité du sol 10.

La figure 6 représente un début de traitement, après la mise en place du champ électrique. La frange capillaire est remontée à un niveau 4a, principalement par électro-osmose sous l'action du champ électrique. La zone de traitement sous influence du champ électrique continu des polluants est symbolisée par les flèches 8a autour des systèmes 9 d'électrodes. Les zones 10a, 10b et 10c sont en zone électro-réductrice et restent quasi inchangées. La partie 10d, et en particulier sa partie inférieure, est traitée en premier par le procédé.

La figure 7 fait apparaître, hors champ électrique, une remontée partielle des cathodes et un démontage des parties cathodiques superflues 1a et 1b de chaque système 9 d'électrodes. On y voit que, en plus de la zone anodique 5 et de la zone isolante 2a de départ, il a été découvert une zone bipolaire 3a et une zone isolante 2b sur chaque système 9 d'électrodes. On distingue une zone hachurée 13a1 de dépollution qui correspond à une partie dépolluée de la zone 10d lors de la première étape de traitement (voir flèches 8a de la figure 6). La ligne 14 représente la limite basse de la zone polluée après une première étape de traitement, et représente au moins en partie une limite supérieure de la zone 13a1.

La figure 8 montre le traitement sur deux niveaux simultanés après remise sous champ électrique du sol 10. La frange capillaire est remontée à un niveau 4b, principalement par électro-osmose. Une nouvelle zone de traitement sous influence du champ électrique continu des polluants est symbolisée par les flèches 8b autour des systèmes 9 d'électrodes. Le traitement des premières zones (voir flèches 8a) est toujours en cours, ce qui permet d'éviter d'éventuelle repollution de la zone déjà traitée par un mouvement descendant de polluants ou de produits de décomposition de ceux-ci à partir de la zone supérieure toujours polluée ou en cours de traitement. Les zones 10a et 10b sont toujours en zone électro-réductrice et restent quasiment inchangées. La zone 10d et la partie inférieure de la zone 10c sont en zone électro-oxydante et sont donc en cours de traitement. La zone 13a1 de dépollution due à la première zone de traitement (voir flèches 8a) est étendue en une zone 13a2 de dépollution due à la deuxième zone de traitement (voir flèches 8b) et une nouvelle zone 13b1 de dépollution apparaît. Elle correspond à une partie dépolluée de la zone 10c, et est due à la deuxième zone de traitement (voir flèches 8b). La ligne 15 représente la limite basse de la zone polluée après une deuxième étape de traitement, et représente au moins en partie une limite supérieure de la zone 13a2 et une limite supérieure de la zone 13b1.

La figure 9 fait apparaître, hors champ électrique, une remontée partielle des cathodes et un démontage des parties cathodiques superflues 1c, 1d, et 1e, des cathodes 1 des systèmes 9 d'électrodes. On y voit que, en plus des zones déjà découvertes, il a été découvert une nouvelle zone bipolaire 3b et une nouvelle zone isolante 2c sur chaque système 9 d'électrodes.

La figure 10 représente le traitement sur trois niveaux simultanés après une remise sous champ électrique du sol 10. La frange capillaire est remontée à un niveau 4c. Une nouvelle zone de traitement sous influence du champ électrique continu des polluants est symbolisée par les flèches 8c autour des systèmes 9 d'électrodes. Le traitement des premières zones (voir flèches 8a) et des deuxièmes zones (voir flèches 8b) est toujours en cours. On distingue toujours une zone hachurée 13a3 de dépollution due à la première zone de traitement (voir flèches 8a) et la zone hachurée 13b2 de dépollution due à la deuxième zone de traitement (voir flèches 8b), qui continuent toutes deux de s'étendre, ainsi qu'une nouvelle zone de traitement (voir flèches 8c) qui génère une nouvelle zone hachurée 13c1 de dépollution, qui correspond à une partie dépolluée de la zone 10b. La ligne 16 représente la limite basse de la zone polluée après une troisième étape de traitement, et représente au moins en partie une limite supérieure de la zone 13a3, une limite supérieure de la zone 13b2 et une limite supérieure de la zone 13c1.

Le traitement est bien entendu à continuer ainsi de suite, et comporte au moins une quatrième étape de traitement, jusqu'à la dépollution quasiment totale du sol 10.

La figure 11 explicite de façon schématique dans un tel traitement le fonctionnement d'une zone bipolaire 3a du système 9 d'électrodes. On distingue sur la figure 11 un générateur 4 de courant continu, relié respectivement à la cathode 1 et à l'anode 5 via l'amenée de courant 50 par les fils électriques respectifs 6a et 6b, pour faire passer une intensité de courant i variable. La zone bipolaire 3a est entourée des zones isolantes 2a, elle-même touchant la zone anodique 5, et 2b, elle-même très proche de la cathode 1. La zone bipolaire 3a est isolée de l'amenée de courant 50 par une zone isolante 20a. Les flèches représentent les lignes de champ électrique qui se créent, d'une part entre la zone anodique 5 et la partie 3ab qui devient cathodique de la zone bipolaire 3a, et entre la cathode 1 et la partie 3ah qui devient anodique de la zone bipolaire 3a. Elle délimitent donc les deux zones de dépollution 8 et 8a.

La zone bipolaire 3a est donc composée d'une partie anodique 3ah, d'une partie intermédiaire 3am, et d'une partie cathodique 3ab.

Au départ, la zone 8a a fonctionné seule, puis la zone 8b fonctionne, tandis que la zone 8a continue de fonctionner, ce qui permet avantageusement de garder la zone 8a dépolluée en premier toujours sous champ électrique au cas où des espèces dégradées dans la zone 8b de dépollution viendraient à être entraînées plus bas que la zone 8b d'origine. Cela est par exemple particulièrement utile lorsque des HAP fortement dégradés donnent des phénols partiellement solubles dans l'eau du sol 10. Ces espèces étant nettement plus mobiles que les HAP, polluants d'origine, et suivant les mouvements d'eau, que ce soit vers le bas (pluie qui pénètre le sol) ou vers le haut (flux électro-osmotique créé par le champ électrique).

Pour la fin du traitement il ne reste en surface 12 du sol 10 qu'une fine couche 10e de sol pollué. Celui-ci se dépollue de la même façon qu'indiqué précédemment par remontée ultime des cathodes 1 ou par un traitement de finition complémentaire comprenant ou non un « grattage » de la zone restant polluée pour éviter une recontamination du sol sous-jacent. A la fin, les systèmes 9 d'électrodes sont extraits du sol 10 pour être éventuellement reconditionnés pour une réutilisation sur un autre chantier ou sur ce même sol 10 quand il sera de nouveau pollué. Un tel reconditionnement comprend généralement au moins un nettoyage et/ou au moins une remise en état de dépôt sur au moins une électrode.

Selon l'invention, il est possible de disposer de moyens supplémentaires pour modifier l'influence des systèmes d'électrodes. Par exemple il est possible d'allonger la (les) zone(s) isolante(s) pour élargir les zones d'influences du champ électrique et ainsi diminuer le nombre de systèmes d'électrodes nécessaire pour couvrir une surface de plusieurs hectares. Il est aussi possible de jouer sur les matériaux d'électrodes, sur les dépôts particuliers sur tout ou partie d'un des systèmes d'électrodes, sur les dimensions d'électrodes. Il est aussi possible, comme indiqué précédemment, de jouer sur l'injection d'eau et/ou de fer et/ou d'argile, mais aussi sur les conditions électriques.

Selon un autre mode de réalisation, indépendant ou non du mode de réalisation précédent, il est possible d'augmenter la longueur d'un système d'électrodes, par exemple et de préférence en augmentant le nombre de tronçons dont est de préférence constitué le système d'électrodes, pour aller plus profond au sein du sol.

Selon un troisième mode de réalisation, indépendant ou non de chacun des deux modes de réalisation précédents, il est possible d'augmenter le nombre de systèmes d'électrodes pour accélérer le travail.

Il est intéressant de noter que, selon le procédé de l'invention, il est très avantageux de dépolluer le sol en commençant par le fond, de façon à protéger la nappe phréatique éventuellement qui se trouve au-dessous du sol pollué 10 et qui sert à alimenter le système 9 d'électrodes en eau. La pollution est généralement plus dense vers la surface 12 du sol 10 que vers la nappe phréatique 11 de ce sol. Les polluants évitent ainsi d'être entraînés vers la nappe phréatique éventuelle dans laquelle est planté le système 9 d'électrodes.

**Exemple**

L'exemple suivant sert à illustrer l'invention sans pour autant en limiter la portée.

Un système d'électrodes a été fabriqué de la façon suivante.

La partie activée de l'anode est de longueur 30 cm et de diamètre 20 mm avec une pointe formant un angle de 15° par rapport à l'axe de l'anode. Des tronçons de 50 cm environ sont assemblés par vissage. Le matériau de l'anode est du titane recouvert d'oxydes de métaux dont majoritairement de l'iridium (type DSA).

Les longueurs d'isolant sont de 97 cm, en matériau Poly Ethylène Haute Densité (PEHD) sous forme de matériau thermo rétractable posé directement sur l'amenée de courant de l'anode elle-même d'un diamètre extérieur 10 mm.

L'électrode bipolaire est de longueur 50 cm pour un diamètre extérieur de 20 mm, et en acier. Elle est placée par dessus l'isolant de l'amenée de courant de l'anode.

La cathode est de longueur environ 150 cm pour un diamètre extérieur de 48,5 mm, un diamètre intérieur de 27 mm (isolant compris), et en matériau extérieur inox alimentaire et matériau intérieur PVC (Poly Chlorure de Vinyle). La longueur de chaque tronçon de cathode est d'environ 560 mm. Cette pièce particulière est agrémentée de pièces complémentaires permettant l'étanchéité interne de la cathode et l'assujettissement de la cathode à l'axe de l'anode. La jonction étanche entre les tronçons de cathode est assurée par un joint plat en caoutchouc nitrile.

La longueur totale du système d'électrodes est d'environ 350 cm.

Les dimensions du prototype sont à peu de chose près celles de la version industrielle du système d'électrodes.

Un tel dispositif selon l'invention, sous forme de prototype, a été testé avec succès sur la dépollution de sols pollués par des HAP (qui sont les HAP "totaux" i.e. les seize HAP couramment analysés) à hauteur de 6000 mg.kg$^{-1}$. La teneur résiduelle était inférieure à 500 mg.kg$^{-1}$ après 130 jours de traitement.

**Revendications**

1. Procédé de traitement de sol comprenant les étapes successives suivantes:

   a) Au moins un enfoncement sensiblement vertical au moins partiel dans le sol (10) d'au moins un système (9) d'électrodes sensiblement rectiligne, ledit système (9) d'électrodes comprenant au moins une tige (2,3,5,50,51) comportant une zone de première polarité (5), au moins une zone bipolaire (3a,3b,3c) et au moins une zone isolante (2a,2b,2c,2d), et au moins un tube creux (1) coaxial à ladite tige (2,3,5,50,51), entourant au moins partiellement ladite tige (2,3,5,50,51) et constituant au moins partiellement une zone de seconde polarité (1) apte à coulisser au moins partiellement autour de ladite tige (2,3,5,50,51), ladite zone de seconde polarité (1) étant placée de façon à découvrir au moins la zone de première polarité (5) dudit système (9) d'électrodes,
   b) Une mise sous champ électrique du système (9) d'électrodes.

2. Procédé selon la revendication 1 comprenant de plus au moins une succession des étapes successives suivantes :

   c) Une désactivation du système (9) d'électrodes par arrêt au moins partiel du champ électrique,
   d) Une remontée partielle de la zone de seconde polarité (1) permettant de découvrir au moins une zone bipolaire (3a,3b,3c) et/ou au moins une zone isolante (2a,2b,2c,2d)
   e) Une remise sous champ électrique du système (9) d'électrodes.

3. Procédé selon l'une des revendications précédentes tel que ladite tige (2,3,5,50,51) comprend une alternance de zones bipolaires (3a,3b,3c) et de zones isolantes (2a,2b,2c,2d).

4. Procédé selon l'une des revendications précédentes tel que ledit système (9) d'électrodes une fois enfoncé dans le sol (10) présente une extrémité supérieure au-dessus de la surface (12) du sol (10), au moins une zone bipolaire (3a,3b,3c) dans le sol (10), et une extrémité inférieure comportant la zone de première polarité (5) dans le sol (10).

5. Procédé selon l'une des revendications précédentes tel que ladite zone de seconde polarité (1) est placée de façon à découvrir au moins la zone de première polarité (5) et au moins en partie une zone isolante (2a) située le plus près de ladite zone de première polarité (5).

6. Procédé selon l'une des revendications précédentes comprenant le démontage de toute zone ou partie de zone de seconde polarité (1a, 1b, 1c) superflue.

7. Procédé selon l'une des revendications précédentes dans lequel, le système (9) d'électrodes étant principalement constitué de parties assemblables appelées tronçons, l'enfoncement du système (9) d'électrodes dans le sol (10) s'effectue par un processus progressif d'enfoncement et d'assemblage successifs des tronçons les uns aux autres, ledit processus comprenant au moins une étape d'enfoncement au moins partiel d'au moins un tronçon, créant un ensemble de tronçon(s) au moins en partie enfoncé, suivie d'au moins une étape d'assemblage au moins partiel d'au moins un autre tronçon à l'ensemble de tronçon(s) au moins en partie enfoncé déjà constitué.

8. Procédé selon la revendication précédente dans lequel l'assemblage comprend au moins un vissage.

9. Procédé selon l'une des revendications précédentes dans lequel on utilise une pluralité de systèmes (9) d'électrodes, lesdits systèmes (9) d'électrodes étant pratiquement tous de polarités identiques, et on procède aux différentes étapes pour chacun desdits systèmes (9) d'électrodes.

10. Procédé de dépollution de sol comprenant au moins un procédé de traitement de sol selon l'une des revendications précédentes.

11. Dispositif de traitement de sol comprenant au moins un système (9) d'électrodes sensiblement rectiligne, ledit système (9) d'électrodes comprenant au moins une tige (2,3,5,50,51) comprenant une zone de première polarité (5), au moins une zone bipolaire (3a,3b,3c) et au moins une zone isolante (2a, 2b,2c,2d), et au moins un tube creux (1) coaxial à ladite tige (2,3,5,50,51), entourant au moins partiellement ladite tige (2,3,5,50,51) et constituant au moins partiellement une zone de seconde polarité (1) apte à coulisser au moins partiellement autour de ladite tige (2,3,5,50,51), ledit système (9) d'électrodes étant de plus apte à être activé.

12. Dispositif selon la revendication précédente dans lequel ledit système (9) d'électrode est en outre apte à être enfoncé au moins partiellement dans le sol (10).

13. Dispositif selon l'une des revendications 11 ou 12 dans lequel la zone de seconde polarité (1) est apte à être démontée (1a, 1b, 1c) au moins partiellement.

14. Dispositif selon l'une des revendications 11 à 13 comprenant au moins un moyen d'activation du système (9) d'électrodes.

15. Dispositif selon l'une des revendications 11 à 14 dans lequel le système (9) d'électrodes est principalement constitué de parties assemblables.

16. Dispositif selon l'une des revendications 11 à 15 dans lequel, lorsqu'elle est cathodique, la zone de première polarité (5) ou de seconde polarité (1) comprend de l'acier inoxydable ou de l'acier non inoxydable.

17. Dispositif selon l'une des revendications 11 à 15 dans lequel la zone bipolaire (3a,3b,3c,3d) comprend de l'acier inoxydable ou de l'acier non inoxydable ou du titane, au moins partiellement recouvert d'au moins un matériau favorisant la réaction de Fenton, de préférence de $SnO_2$ dopé par Sb.

18. Dispositif selon l'une des revendications 11 à 17 dans lequel, lorsqu'elle est anodique, la zone de seconde polarité (1) ou de première polarité (5) comprend du titane recouvert d'au moins un composé de métal, précieux ou non.

19. Dispositif selon la revendication précédente dans lequel ledit composé de métal, précieux ou non, est choisi dans le groupe formé par le ruthénium, l'iridium, le tantale, l'étain, et l'antimoine, sous des formes au moins partiellement oxydées ou non, et leurs mélanges et leurs superpositions.

20. Dispositif selon l'une des revendications 11 à 19 dans lequel le tube creux (1) constituant au moins partiellement la zone de seconde polarité (1) comprend au moins une zone isolante intérieure sur pratiquement toute sa longueur.

21. Dispositif selon l'une des revendications 11 à 20 comprenant en outre au moins un moyen de placement, mécanique ou manuel, d'au moins un système (9) d'électrodes.

22. Dispositif selon l'une des revendications 11 à 19 comprenant une pluralité de systèmes (9) d'électrodes, lesdits systèmes (9) d'électrodes étant pratiquement tous de polarités identiques.

23. Dispositif selon l'une des revendications 11 à 22 destiné à la mise en oeuvre d'un procédé selon l'une des revendications 1 à 9.

24. Utilisation d'un dispositif selon l'une des revendications 11 à 21 pour la dépollution de sol.

FIG. 1

FIG. 2

FIG. 3

FIG. 4

FIG. 5

FIG. 6

EP 1 584 381 A1

FIG. 7

FIG. 8

EP 1 584 381 A1

FIG. 9

FIG. 10

FIG. 11

**EP 1 584 381 A1**

**Office européen des brevets**

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 6 255 551 B1 (SHAPIRO ANDREW PHILIP ET AL) 3 juillet 2001 (2001-07-03) * colonne 7, ligne 47 - colonne 9, ligne 57 * * figures 2-4 * ----- | 1,11 | B09C1/08 B09C101/00 |
| A | WO 97/28294 A (ELECTROCHEMICAL DESIGN ASSOCIA) 7 août 1997 (1997-08-07) * page 6, ligne 1 - page 12, ligne 16 * * revendications * * figure 1 * ----- | 1,11 | |

**DOMAINES TECHNIQUES RECHERCHES (Int.Cl.7)**

B09C
E02D

Le présent rapport a été établi pour toutes les revendications

| Lieu de la recherche | Date d'achèvement de la recherche | Examinateur |
|---|---|---|
| La Haye | 15 juillet 2005 | Laval, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 05 29 0568

La présente annexe indique les membres de la  famille de brevets relatifs aux documents  brevets cités dans le rapport de recherche européenne visé ci-dessus.
Lesdits members sont contenus au fichier informatique de l'Office  européen des brevets à la date du
Les renseignements fournis sont donnés à titre  indicatif et n'engagent pas la responsabilité  de l'Office européen des brevets.

15-07-2005

| Document brevet cité au rapport de recherche | Date de publication | Membre(s) de la famille de brevet(s) | Date de publication |
|---|---|---|---|
| US 6255551    B1 | 03-07-2001 | AUCUN | |
| WO 9728294    A | 07-08-1997 | WO      9728294  A1<br>US      5861090  A | 07-08-1997<br>19-01-1999 |

EPO FORM P0460

Pour tout renseignement concernant cette annexe :  voir Journal Officiel de l'Office européen des  brevets, No.12/82